# EUROPEAN PATENT APPLICATION

(11) **EP 2 103 946 A2**
(43) Date of publication of application: **23.09.2009**
(21) Application number: 09002703.8
(22) Date of filing: 25.02.2009
(51) Int. Cl.: G01N 35/00, G01N 35/08

(54) **Automatic analyzer**

(30) Priority: 17.03.2008 JP 2008066946
(71) Applicant: Hitachi High-Technologies Corporation, Minato-ku Tokyo 105-8717 (JP)
(72) Inventor: Sakazume, Taku, Hitachinaka-shi Ibaraki 312-8504 (JP); Suzuki, Kantaro, Hitachinaka-shi Ibaraki 312-0033 (JP)
(74) Representative: Strehl Schübel-Hopf & Partner

(57) **Abstract**

In an analytical process that uses magnetic fine particles, no particles elude settling during several minutes, and this also holds true for particles as small as about 1.3 g/ml in specific gravity. If one part only of the chemical solution is used in subsequent process steps, the concentration of the solution is likely to vary according to the particular suctioning position, the amount of solution suctioned, or the flow of the solution in the vessel during suctioning. Accordingly, even under a nonuniform state of a magnetic particles solution due to reasons such as settling equivalent to introduction of a flow cell, and in addition, even when there is an increase in nonuniformity that is derived from a sample to be analyzed, a concentration of the magnetic particles in a reaction solution is made uniform before the solution is suctioned. That is to say, this invention provides means that homogenizes a suspension that contains magnetic particles, by, for example, stirring intentionally the magnetic particles solution before suctioning this solution.

## Description

### BACKGROUND OF THE INVENTION

### 1. Field of the Invention

The present invention relates generally to automatic analyzers for qualitatively and quantitatively analyzing biological samples such as blood and urine, and more particularly, to an automatic analyzer used for analyzing magnetic particles.

### 2. Description of the Related Art

Traditionally, the trace constituents contained in humoral constituents such as blood or urine have been analyzed by, after binding either glass particles, polystyrene particles, or other fine particles of a large surface area per weight, to the trace constituents, recovering and concentrating these constituents using a centrifuge or a filter. In contrast to these gravitational or dimensional separating methods, techniques based on magnetic separation have been introduced. Compared with centrifugal force, magnetic adsorption power allows rapid separation using a compact apparatus. During this solid-phase extraction method that uses magnetic particles to extract chemical constituents, a chemical compound that yields a specific bond is adsorbed or bound onto the surfaces of the magnetic microparticles and then the constituents contained in the sample solution are recovered and concentrated via the compound. The solid-phase extraction method is utilized particularly in a method of recovering hormones, cancer markers, and/or other constituents of extremely low concentrations, by highly specific antigen-antibody reactions, and this method is called "heterogeneous immunoassay." Hybridization in DNA is also utilized. In addition, the solid-phase extraction method is utilized in the magnetic type of cell separation apparatus that recovers cells having a particular kind of protein on the surface.

Compared with polystyrene and other resin materials, however, magnetic substances are high in density, and even one coated with ferrite by chemical plating has a specific gravity of about 1.3 g/ml with respect to polystyrene particles. While in solutions, therefore, magnetic substances have the nature of sinking progressively to the bottom of the solution vessel within a time of several minutes to several tens of minutes by gravity, not magnetism.

Methods in which a solution that contains magnetic microparticles is suctioned into a flow passageway and then the magnetic particles are recovered using magnetic fields generated by magnets equipped near the passageway are developed for the above-discussed reaction systems that use magnetic microparticles. Among these methods are a method of adsorbing magnetic particles onto the surface of a metallic plate, in particular, and causing electrochemical reactions in order to analyzing the response of an electric current, and a method of causing luminescence in an electrochemical manner. The two methods are disclosed in JP-A-2006-184294.

Referring to flow cell analysis that is the analysis using a space provided in a flow passageway, a method using an ultrasonic transducer is disclosed in JP-A-10-300651 as an example of a method in which a sample and a reagent are mixed for homogeneity before being introduced into the detection zone of an electrochemical sensor provided near the passageway.

In addition, for mixing in an automatic analytical system that includes magnetic particles, a method of measuring and confirming the absorbance obtained after bound/free (B/F) reactions is disclosed in JP-A-11-326334.

A method of switching detection sensitivity according to the applied voltage of a photomultiplier is disclosed in JP-A-59-125043.

### SUMMARY OF THE INVENTION

During the above-discussed analytical processes that use magnetic particles, when such electrochemical reactions that involve, as a catalyst, the compound bonded onto the surfaces of the magnetic particles, are considered as detection reactions, various molecules that have been adsorbed onto the surfaces of the magnetic particles are likely to affect the occurrence of signals. Additionally, it is necessary that the magnetic particles be adsorbed in all quantities thereof or that the absolute quantity of magnetic particles defined by the distribution of the magnetic field be adsorbed with high reproducibility. Response to magnetism, such as the time required for the adsorption, is estimated to be changed by the influence of the molecules adsorbed onto the surfaces of the magnetic particles. It is desirable, therefore, that all molecules adsorbed onto the surfaces of the magnetic particles, except for molecules intended for prior selective adsorption, be removed as far as possible before being adsorbed magnetically.

In general, for accelerated progress of reactions by magnetic particles, the pipetted reaction solution that contains the magnetic particles is mixed with a reagent and then left intact for several minutes. The magnetic particles gradually settle during the reactions. For this reason, when the suspension containing the magnetic particles is introduced into a flow passageway following completion of the required reactions, the concentration of the suspension varies from position to position in the solution. There is a need in this case to establish the appropriate analytical method by finding stable conditions against the position-dependent variation that the concentration is high in some sections and low in some sections. Additionally, a reaction solution prepared by mixing a liquid containing an unknown sample, with a reagent and a magnetic particles suspension, especially, the constituents contained in the unknown sample, for example, serum contains the inclusion particularly from the proteins and lipids in the serum or the inclusion from the constituents of a blood cell separating agent or anticoagulant in the tube that was used for blood sampling. This reaction solution or the serum, therefore, includes a compound that becomes effective, for example, both in retarding the settling of the magnetic particles by a protective colloid effect for the magnetic particles, and in accelerating the settling of the magnetic particles by multivalent cations. Accordingly, the degree of settling varies from one reaction vessel to another. This, in turn, makes it difficult to search for the stable conditions mentioned above. Introduced for these reasons is a method for performing the steps of adsorbing the magnetic particles beforehand in the reaction vessel by means of magnetic fields, discharging the supernatant, and redispersing the magnetic particles, that is, causing B/F reactions (antigen-antibody reactions, for example, occur to separate the chemical constituents into bound constituents that have been adsorbed onto the magnetic particles in a specific fashion, and free constituents that have been physically adsorbed in a non-specific fashion). Cleaning outside the system in such a method, however, requires an additional treatment mechanism. Meanwhile, when the suspension containing the magnetic particles is suctioned and the magnetic particles are magnetically recovered near the magnetic fields generated in the vicinity of the flow passageway, the length of the passageway from the suctioning section to the magnetic fields is increased and cleaning is performed in this zone. However, even this method has the problem that a sufficient cleaning time and the use of a cleaning agent are required for removal of the adsorbate from the inner wall of the passageway which was used for cleaning. Causing the B/F reactions of the suspension which contains magnetic particles, and providing a cleaning passageway in the passageway leading to a flow cell, therefore, complicate the system, so a simpler system configuration free from these complexities is desirable.

An object of the present invention is to provide an automatic analyzer capable of obtaining highly reproducible measurement results, even when a solution that contains magnetic particles is nonuniform for reasons such as settling equivalent to introduction of a flow cell, and in addition, even when there is an increase in nonuniformity that is derived from a sample to be analyzed; the highly reproducible measurement results being made obtainable by uniformizing a concentration of the magnetic particles in a reaction solution before suctioning the solution.

In order to achieve the above object, the present invention includes means to homogenize a suspension that contains magnetic particles, by, for example, stirring the magnetic particles solution before introducing this solution into a flow cell.

Prior to magnetic adsorption in the flow passageway, the suspension containing the magnetic particles is homogenized in the reaction vessel. The homogenization makes suppressible any variations in the concentration of the reaction solution at least during the suctioning thereof, thus allowing reproducibility of the analysis to be enhanced.

### BRIEF DESCRIPTION OF THE DRAWINGS

Fig. 1 is an explanatory diagram of a process for homogenizing a magnetic particles suspension immediately before the suspension is introduced into a flow cell;
Fig. 2 is an explanatory diagram of a process in which a reaction solution that includes magnetic particles which have settled, and a supernatant, is stirred before being suctioned in two split operations; and

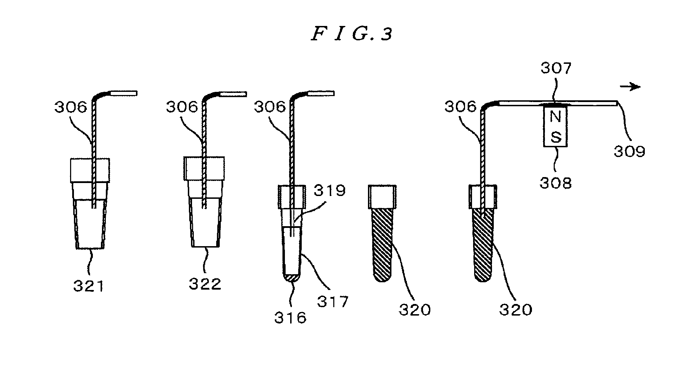

Fig. 3 is an explanatory diagram of a process in which a reaction solution that includes magnetic particles which have settled, and a supernatant, is suctioned after being stirred using a jet generated by regurgitation of a buffer solution which has been suctioned into a nozzle beforehand.

### DESCRIPTION OF THE PREFERRED EMBODIMENTS

Embodiments of the present invention are described below using the accompanying drawings.

### (First Embodiment)

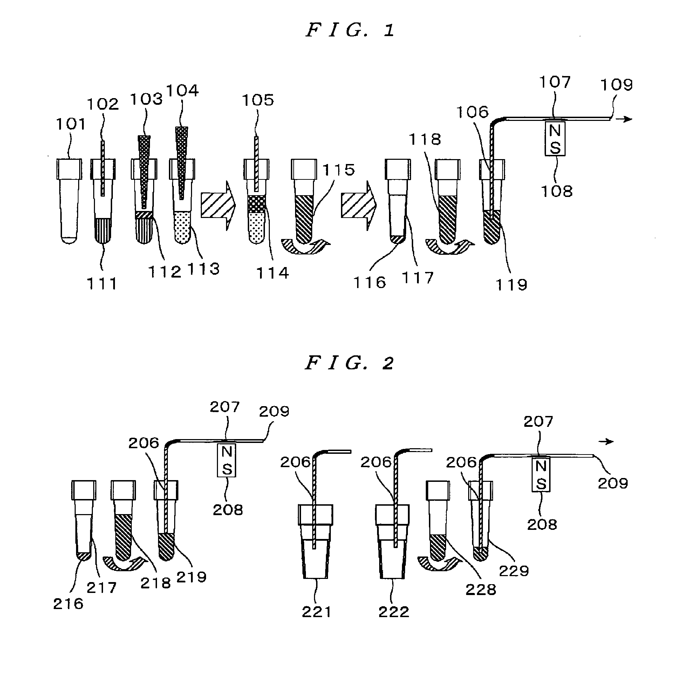

Fig. 1 shows a method in which a suspension that contains magnetic particles is stirred immediately before being suctioned. A reaction vessel 101 is set up for use, and a reagent 111 is injected into the vessel via a nozzle 102. Antibodies to be bound onto a desired constituent contained in a sample, and labels chemically bound onto the antibodies beforehand are integrally present in the reagent. Also, the reagent contains a biotinylation-modified antibody for binding each magnetic particle and the desired constituent contained in the sample. Sample 112 is added to this reagent using a disposable chip 103. In addition, suction and discharge steps with a disposable chip 104 are performed and the reagent 111 and the sample 112 are mixed to form a reaction solution 113. This reaction solution is left intact for nine minutes at 37°C, for example. The desired constituent in the sample and each label bind together during this time. Additionally, the sample and the biotinylation-modified antibody bind to integrate the label and the biotin via the desired constituent of the sample. While the solution remains undisturbed in the vessel, dispersion is expected to make a reaction continue, bringing the reaction into an equilibrium. After this first reaction has reached the equilibrium, magnetic particles solution 114 is added using a nozzle 105. Before being pipetted, the magnetic particles solution is desirably stirred well for a uniform concentration. This magnetic particle has a surface precoated with a chemical substance called avidin. Avidin and the above-mentioned biotin have the nature of binding onto each other very strongly. In addition, contents of the vessel are mixed by horizontal spinning called vortexing. Thus, a uniform suspension 115 is obtained. This solution is maintained at 37°C for nine more minutes. Finally, the magnetic particles, the desired constituent in the sample, and even the labels are integrated. During this process, the magnetic particles 116 settle to separate from a supernatant 117. Microscopically, fine particles are dispersed in the supernatant 117. The magnetic particles may react to geomagnetism and become concatenated, or may adsorb to one another according to a particular composition of the reaction solution. The magnetic particles thus agglutinated are generally prone to settle. Next, the contents of the vessel are remixed to form a suspension 118, which is then suctioned towards a flow passageway 109 by a nozzle 106. This mixing process is expected to uniformize the magnetic particles firstly in quantity per unit volume, or basically, in terms of mass. In addition, magnetic agglutination due to a weak magnetic field such as geomagnetism, and weak agglutination due to adsorption are broken by mixing to change the solution into a suspension whose magnetic particles are each closer to a single particle in structure. The suctioned suspension that contains the magnetic microparticles 107 is attracted by a magnet 108 and adsorbed onto a region neighboring a magnetic pole. An electrochemical reaction, for example, is caused to these magnetic particles, so that such a signal as an electric current response or electrochemical luminescence is detected. This method eliminates the necessity for prior B/F reactions of the magnetic particles or makes the magnetic particles introducible into a flow cell by weaker B/F reactions. Alternatively, length and volume of the flow passageway from the reaction vessel to an adsorption position of the magnetic particles in the flow cell can be minimized and a time required for cleaning the passageway or the quantity of cleaning agent required can be reduced as a result.

### (Second Embodiment)

If the amount of reaction solution required for a detector is small enough, the solution can be suctioned in two split operations. This assumes that because of extremely wide concentration ranges in high-sensitivity immunoassay, two different detection sensitivity levels are used selectively. One is a detection sensitivity level suitable for low concentrations, and one is a detection sensitivity level suitable for high concentrations. In that case, the suspension must have an equivalent state during first and second suctioning operations each. In other words, the quantity, or weight, of magnetic particles per unit volume must be equivalent. For this reason, Fig. 2 shows mixing process steps assuming that the reaction solution is prepared in a way similar to that of the first embodiment and that the suspension containing the magnetic particles has already gone through reactions. As in Fig. 1, the reaction solution with the magnetic particles 216 that have settled to separate from a supernatant 217 is stirred and a homogeneous suspension 218 is obtained. This suspension is next suctioned using a nozzle 206. A reaction solution 219 is left after about half of the suspension has been suctioned. During the first suctioning operation, the suspension containing the magnetic microparticles is carried along the passageway and then magnetically collected at a region 207 near a magnet 208. The supernatant is discharged. This is followed by a detection reaction. After the detection reaction, the nozzle 206 is positioned into a vessel containing a cleaning agent 221, then suctions the cleaning agent, and cleans the passageway. A downstream side of the passageway is omitted from Fig. 2. The nozzle 206 also pre-suctions a buffer solution 222 for a second detection reaction. This operation fills the passageway with the buffer solution 222 for the second detection reaction. Thus, the reaction solution 228 is stirred once again and then positioned at the nozzle 206. After being homogenized by mixing, the reaction solution is suctioned by the nozzle 206 and detected similarly to the above. It is expected that by the time this process flow holds, the reactions of the reaction solution will make no dominant progress during a time from the first suctioning operation to the second suctioning operation, that is, the suspension will have already reached a final chemical equilibrium in startup timing of the first suctioning operation.

### (Third Embodiment)

A mixing method using a jet of solution delivered from a suction nozzle in a different apparatus configuration is described and shown below. As in the second embodiment, a cleaning agent 321 for a flow passageway is suctioned using a nozzle 306, and then a buffer solution 322 required for a detection reaction is suctioned using the nozzle 306 to fill the passageway interior. In this suctioning step, such a region that helps prevent the cleaning agent 321 from returning from a discharge side thereof, even at a delivery rate in next step, is filled with the buffer solution 322 up to a magnetic particles adsorption section. After this, a reaction solution from which magnetic particles 316 and a supernatant 317 are separated is delivered from the nozzle filled with the buffer solution 322, and the reaction solution is stirred with the jet 319 to obtain a homogenous reaction solution 320. Next, a suspension that contains the magnetic particles is suctioned using the nozzle 306, then as in the first and second embodiments, the magnetic particles are adsorbed, and the amount of constituent adsorbed to the magnetic particles is determined by a chemical detection reaction that follows. The detection buffer solution pre-suctioned into the suction nozzle has been used in the present embodiment. A liquid equivalent to the buffer solution, however, may be added and stirred in a similar jet of solution delivered from another nozzle. For example, if an appropriate concentration during reactions of the magnetic particles differs from an appropriate concentration obtainable during nozzle suctioning and the adsorption of the magnetic particles, a final concentration of the magnetic particles in the suspension can be reduced to half of the concentration obtained during the reactions, by adding, for example, an amount of buffer solution that is equivalent to that of reaction solution. This means that a concentration of a protein which is a chief constituent of the reaction solution can also be halved at the same time and thus that hindrances to the adsorption of the reaction solution can be reduced.

## Claims

1. An automatic analyzer comprising:
mixing means by which magnetic particles that have undergone B/F reactions are stirred before being introduced into a flow cell.

2. The automatic analyzer according to claim 1, further comprising:
control means for performing control such that during one analytical cycle, a reaction solution containing the magnetic particles that underwent B/F reactions is suctioned in a plurality of operations into the flow cell and such that the solution is stirred by the mixing means prior to each of the suctioning operations.

3. The automatic analyzer according to claim 1, wherein:
the mixing means is means for injecting into the flow cell a reaction solution containing the magnetic particles that underwent B/F reactions.
